# EUROPÄISCHE PATENTSCHRIFT

(11) **EP 0 951 326 B1**
(45) Veröffentlichungstag und Bekanntmachung des Hinweises auf die Patenterteilung: **05.09.2001**
(21) Anmeldenummer: 97951876.8
(22) Anmeldetag: 11.11.1997
(51) Int. Cl.: B01D 21/04, B01D 21/24

(54) **SEDIMENTATIONSBECKEN MIT RECHTECKIGEM GRUNDRISS ZUM ABSCHEIDEN VON SCHLAMM AUS ABWASSER**
SEDIMENTATION BASIN WITH RECTANGULAR LAYOUT FOR SEPARATING SLUDGE FROM WASTE WATER
BASSIN DE DECANTATION DE FORME RECTANGULAIRE POUR LA SEPARATION DE LA BOUE CONTENUE DANS DES EAUX USEES

(30) Priorität: 02.12.1996 DE 19649814
(43) Veröffentlichungstag der Anmeldung: 27.10.1999
(73) Patentinhaber: Emschergenossenschaft Lippeverband, 45128 Essen (DE); Bever, Jurgen, 47546 Kalkar (DE); Holthausen, Erich, 51469 Bergisch Gladbach (DE)
(72) Erfinder: BEVER, Jürgen, D-47546 Kalkar (DE); HOLTHAUSEN, Erich, D-51469 Bergisch Gladbach (DE); SCHLEGEL, Sigurd, D-47441 Moers (DE); STEIN, Andreas, D-48249 Dülmen (DE)
(74) Vertreter: Kaewert, Klaus
(86) Internationale Anmeldenummer: EP9706240
(87) Internationale Veröffentlichungsnummer: WO9824530

(56) Entgegenhaltungen:
- DE-C- 4 137 212
- GB-A- 194 450
- GB-A- 514 662
- US-A- 2 033 291
- US-A- 2 118 157
- US-A- 2 676 920
- US-A- 2 834 454
- US-A- 3 044 627

## Beschreibung

Die Erfindung betrifft ein Sedimentationsbecken nach Anspruch 1 mit rechteckigem Grundriß zum Abscheiden von Schlamm aus Abwasser, mit einem Zulauf für das Gemisch aus Schlamm und Abwasser in das Sedimentationsbecken, einer an der Sohle des Sedimentationsbeckens entlangstreichend angetriebenen Räumeinrichtung für den abgesetzten Schlamm, einer Abzugseinrichtung für den Schlamm und einem Ablauf für das Klarwasser. Derartige Sedimentationsbecken werden insbesondere im Bereich der Klärtechnik eingesetzt. Sie können als Nachklärbecken, Grobentschlammungsbecken oder dergleichen Verwendung finden. Solche Sedimentationsbecken werden dem Gemisch aus Schlamm und Abwasser bei relativ geringer Geschwindigkeit durchflossen, wobei es das Ziel ist, daß sich der Schlamm durch Schwerkrafteinwirkung an der Sohle des Sedimentationsbeckens absetzt.

Sedimentationsbecken der eingangs beschriebenen Art sind bekannt. Es handelt sich um Rechteckbecken, bei denen im Bereich der einen Stirnseite das Gemisch aus Schlamm und Abwasser in das Becken eingeführt wird. In dem Sedimentationsbecken ist eine Räumeinrichtung meistens in Form eines Bandräumers untergebracht. Ein solcher Bandräumer weist in den Seitenbereichen je eine Kette auf, die in der Regel über vier Umlenkrollen geführt wird. Die beiden Ketten sind über Räumschilde miteinander verbunden, die sich im wesentlichen über die Breite des Beckens erstrecken. Die Räumeinrichtung wird so angetrieben, daß die Räumschilde an der Sohle des Sedimentationsbecken entlangstreichen und den dort abgesetzten Schlamm mitnehmen. Die Antriebsrichtung der Räumeinrichtung ist derart, daß sich der untere Trum, also der Trum, der die Förderarbeit für den Schlamm erbringt, entgegen der Durchflußrichtung des Gemisches aus Schlamm und Abwasser bewegt. Das Becken weist in der Beckensohle im Bereich des Zulaufes einen Trichter auf, in den der von der Räumeinrichtung geförderte Schlamm gefördert wird, wobei er in dem Trichter zusätzlich absinkt. Es ist eine Abzugseinrichtung für den Schlamm vorgesehen, mit welcher in Förderphasen der Schlamm aus dem Trichter herausgefördert wird. Der Abzug des Klarwassers erfolgt seitlich oder an der dem Zulauf gegenüberliegenden Seite mit Hilfe von Tauchrohren oder Rinnen.

In solchen Sedimentationsbecken, die zuweilen auch als turbulente Strömungen bezeichnet werden. Diese Turbulenzen können die verschiedensten Ursachen haben, beispielsweise durch die Bewegung der angetriebenen Räumeinrichtung verursacht sein oder auch durch den periodischen Betrieb der Abzugseinrichtung für den Schlamm ausgelöst werden und dergleichen. Diese unvermeidlich auftretenden Turbulenzen müssen bei der Auslegung des Sedimentationsbeckens berücksichtigt sein, weshalb man davon ausgeht, daß die nutzbare Höhe solcher Becken größer als drei Meter sein muß (vgl. ATV-A 131, S. 14). Je nach Art des abzusetzendes. Schlammes und den übrigen Bedingungen wird sich in dem Sedimentationsbecken eine Schichtung ergeben, wobei die unterste Schicht als Eindick- oder Räumzone angesprochen werden kann. Oberhalb der Räumzone bildet sich eine Filterzone, gefolgt von einer Speicherzone im Mittelbereich und einer Klarwasserzone im Anschluß an den Wasserspiegel im Sedimentationsbecken. Es versteht sich, daß diese Zonen nicht exakt räumlich voneinander getrennt sind, sondern daß Übergangsbereiche vorgesehen sind und auch die einzelnen Schichtdicken unterschiedlich groß anwachsen können, je nach Konzentration sowie nach anderen Parametern des Schlammes im Abwasser. Die Höhe bzw. Tiefe des rechteckigen Sedimentationsbeckens, die durch den Trichter für den Schlammabzug noch vergrößert wird, stellt einen gewichtigen Nachteil dar. Es kann durchaus vorkommen, daß die Sohle des Beckens unterhalb des Grundwasserspiegels platziert werden muß, so daß hier zusätzliche Bau- und Konstruktionsmaßnahmen erforderlich werden. Andererseits lassen sich die verschiedenen Zonen in ihrer jeweiligen Höhe nicht willkürlich verkleinern, und der Größe, insbesondere Länge, des Sedimentationsbeckens sind auch Grenzen gesetzt.

Die US-A-2 118 157 beschreibt ein Sedimentationsbecken nach dem Oberbegriff von Anspruch 1.

Der Erfindung liegt die Aufgabe zugrunde, ein Sedimentationsbecken der eingangs beschriebenen Art aufzuzeigen, weiches bei hinreichender Abscheidewirkung eine vergleichsweise kleinere Höhe bzw. Tiefe aufweist.

Die Erfindung geht von dem Gedanken aus, die Strömung in dem Sedimentationsbecken in Durchströmrichtung zu vergleichmäßigen, wobei durch die Veränderung der Lage der Abzugseinrichtung für den Schlamm die Strömung in dem Sedimentationsbecken durch Verringerung der Geschwindigkeitsgradienten oberhalb des Räumers abgebaut werden und damit die Ursachen für auftretende Turbulenzen beseitigt oder doch zumindest stark vermindert sind. Für die eindeutige Vorgabe der Durchströmrichtung ist es wichtig, daß der Zulauf im Bereich der einen Stirnseite des Sedimentationsbeckens und die Abzugseinrichtung für den Schlamm an der anderen Stirnseite des Sedimentationsbeckens angeordnet ist. Dadurch wird erreicht, daß sich der Schlamm ebenfalls in Durchströmrichtung bewegen muß, und es ergibt sich die Möglichkeit, die Räumeinrichtung auch in dieser Durchströmrichtung mit ihrem unteren Trum anzutreiben. Der Antrieb der Räumeinrichtung geschieht jedoch nicht irgendwie, sondern so, daß nach Möglichkeit größere Relativbewegungen und Geschwindigkeitsdifferenzen zwischen Abwasser und Räumeinrichtung vermieden werden. Freilich wird sich ach in einem solchen Sedimentationsbecken ein Geschwindigkeitsprofil über die Höhe und über den Querschnitt des Beckens ausbilden. Bedenkt man zusätzlich, daß die an der Räumeinrichtung vorgesehenen Räumschilde eine entsprechende Ausdehnung in Höhenrichtung aufweisen und nur mit gleicher Geschwindigkeit bewegt werden können, dann lassen sich an allen Punkten der Räumeinrichtung Differenzgeschwindigkeiten zu der Geschwindigkeit des strömenden Abwassers nicht vermeiden. Es ist aber möglich, diese Differenzgeschwindigkeiten relativ klein zu gestalten. Bei Einhaltung dieser Maßnahmen wird es bei einem bestimmten Anwendungsfall überraschenderweise möglich, die Höhe eines Rechteckbeckens bei gleicher Sedimentationsleistung in eine Größenordnung von etwa zwei Metern zu erniedrigen. Während im Stand der Technik für diesen Anwendungsfall Höhen von drei Metern und mehr nicht vermeidbar erschienen und die Entwicklung solcher Becken in Richtung Vergrößerung der Höhe bzw. Tiefe gerichtet war, schlägt die vorliegende Entwicklung eine gegensätzliche Richtung ein. Dies gilt für andere Anwendungsfälle entsprechend. Dies bedeutet weiterhin, daß die Höhen der einzeln eingeschichteten Zonen, sofern überhaupt vorhanden, vergleichsweise verringert werden. Dies wird jedoch möglich infolge der Verringerung bzw. Vermeidung der bisher unvermeidlichen Turbulenzen.

Freilich ist auch hier die Höhe der Zone vom Durchsatz und von der Schlammvolumenbeschickung abhängig. Das neue Sedimentationsbecken schafft optimale Bedingungen für die Sedimentation durch kleine Geschwindigkeitsgradienten an den entscheidenden Stellen im Sedimentationsbecken.

Die Sohle des Sedimentationsbeckens kann durchgehend flach ausgebildet sein. Damit werden vorteilhafte Trichter, die an sich in nachteiliger Weise die Höhe des Sedimentationsbeckens vergrößern würden, vermieden. Hierdurch wird auch der Querschnitt des Beckens einfacher, und die Baukosten erniedrigen sich. Das Sedimentationsbecken kann aber auch einen kleinen Trichter aufweisen, der die Höhe bzw. Tiefe nicht allzusehr vergrößert und auf der dem Zulauf abgekehrten Seite vorgesehen ist. Die Sohle des Beckens kann sich mit geringem Gefälle in Durchströmrichtung erstrecken, und zwar mit und ohne gleichzeitige Anwendung eines kleinen Trichters.

In Verbindung mit den vorstehenden Merkmalen ist es von Bedeutung, daß die Unterkante des Zulaufs etwa in Höhe der Sohle des Sedimentationsbeckens angeordnet ist. Diese Anordnung zielt auf einen Bereich ab, in dem normalerweise die Eindick- oder Räumzone vorhanden ist. Eine intensivierte Sedimentationswirkung ist die Folge. Dadurch wird eine nach unten gerichtete Strömung im Bereich des Zulaufes varmieden. Eine Trennzone bildet sich nicht aus, so daß sich auch hierdurch die Tiefe des Beckens vorteilhaft verringert.

Der Zulauf für das Gemisch aus Schlamm und Abwasser kann sich im wesentlichen über die Breite des Sedimentationsbeckens erstrecken. Dies ist wichtig zur Vermeidung örtlich größerer Einströmgeschwindigkeiten. Gleichfalls ist diese Maßnahme von Bedeutung für eine Verteilung des Zulaufs über die Breite des Beckens. In diesem Zusammenhang ist es durchaus sinnvoll und nützlich, Einströmbedingungen unter Verwendung beispielsweise entsprechend gebogener Leitbleche vorzusehen, mit deren Hilfe Einfluß auf die Strömungsumlenkung des sich über die Breite des Beckens erstreckenden Zulaufes genommen wird. Es versteht sich, daß der Zulauf in ein solches Sedimentationsbecken mit einem Minimum an kinetischer und potentieller Energie zu erfolgen hat, auch deshalb, um an dieser Stelle Turbulenzen zu vermeiden. Im Stand der Technik befindet sich der Schlammabzug im Bereich der Stirnwand, in der auch der Zulauf vorgesehen ist. Dabei muß je nach Schlammanfall mehr oder weniger Schlamm über die Räumeinrichtung zurückgefördert, also entgegen der Durchströmrichtung gefördert werden. Die Strömung schichtet sich entsprechend der Dichteverhältnisse ein. Es ergeben sich zwei unterschiedliche Strömungs- bzw. Fließrichtungen, so daß der Zulauf durch den Rücklauf des Schlamms vergleichsweise angehoben wird, und zwar aus Gründen unterschiedlicher Dichte. Dies stört auch die Ausbildung der Speicherzone im Stand der Technik, während deren Bildung beim Anmeldungsgegenstand begünstigt ist und für die Anordnung des Zulaufes genutzt wird. Bei der erfindungsgemäßen Lösung steigt die Konzentration mit zunehmender Eindickung in Durchströmrichtung an. Turbulenzen werden verhindert, da eine Gegenströmrichtung nicht vorhanden ist. Hieraus folgt ein optimales Absetzen des Schlammes mit zunehmender Eindickung in Durchströmrichtung. Da die Richtung der Räumeinrichtung und die Richtung der Strömung beide in Durchströmrichtung gerichtet, also gleichgerichtet sind, können sich - wenn überhaupt - nur vergleichsweise kleine Geschwindigkeitsgradienten ausbilden, die für die Erzeugung von Turbulenzen zu schwach sind.

Auch die Abzugseinrichtung für den Schlamm sollte sich im wesentlichen gleichmäßig über die Breite des Sedimentationsbeckens erstrecken. Damit werden örtliche Geschwindigkeitserhöhungen auch an dieser Stelle vermieden. Es besteht sogar die Möglichkeit, auch im Bereich der Abzugseinrichtung etwa übereinstimmende Geschwindigkeiten zwischen Schlamm und Abwasser zu wählen, um auch an dieser Stelle Turbulenzen zu vermeiden.

Die Räumeinrichtung kann als Bandräumer ausgebildet sein. Solche Bandräumer bieten einen besonderen Vorteil, weil sie die Durchströmung des Sedimentationsbeckens vergleichsweise sehr wenig behindern. Sie sind im Mittelbereich weitgehend offen gestaltet. Nur die Räumschilde erstrecken sich über die Breite des Beckens. Aber selbst die Räurnschilde sind auf relativ großem Abstand zueinander angebracht. Und besitzen im allgemeinen nur eine vergleichsweise geringe Höhe etwa in der Größenordnung von 5 - 20 cm. Sinnvolle Räumergeschwindigkeiten liegen in der Größenordnung von 1 - 10, vorzugsweise von 1 - 5 cm/s. Die Geschwindigkeit des Bandräumers muß an die Eindickfähigkeit des Schlamms angepaßt werden.

Die Abzugseinrichtung für den Schlamm kann als Saugheber ausgebildet sein, der mit Saugdüsen ausgestattet ist. Durch diese Ausbildung wird auch die Strömung bei der Saugabfuhr des Schlamms über die Breite des Sedimentationsbeckens vergleichmäßigt und auf diese Weise an dieser Stelle dem Entstehen von Turbulenzen entgegengewirkt.

Der obere Trum des Bandräumers kann zur Schwimmschlammräumung ausgebildet und angeordnet sein. Hier stört eine entgegengesetzt zur Durchströmrichtung gerichtete Bewegung vergleichsweise wenig. Es ist aber auch möglich, daß der obere Trum des Bandräumers oberhalb des Wasserpegels angeordnet ist, wenn eine Räumung des Schwimmschlamms nicht erforderlich erscheint oder die Abfuhr des Schwimmschlammes in anderer Weise realisiert werden kann. Auf jeden Fall ist es möglich, unterschiedlich gerichtete Geschwindigkeiten auch im Bereich des Wasserpegels zu vermeiden, weil dort die Klarwasserzone vorhanden ist.

Als Ablauf für das Klarwasser können Überlaufrinnen vorgesehen sein, die seitlich oder in dem dem Zulauf zugekehrten Bereich des Sedimentationsbeckens angeordnet sind. An sich ist die Anordnung des Ablaufes für das Klarwasser nicht besonders kritisch, d. h. es kommen hier mehrere Stellen an dem Sedimentationsbecken in Frage, insbesondere auch die Bereiche der Längsseiten des Sedimentationsbeckens. Die Abfuhr des Klarwassers kann einerseits über Tauchrohre, andererseits aber auch über Überlaufrinnen erfolgen, die entsprechend platziert sind. Die Verwendung von Tauchrohren kann die Tiefe des Beckens vergrößern, während dies bei Überlaufrinnen nicht der Fall ist. Ein etwa im Bereich des Zulaufes beginnender seitlicher Abzug des Klarwassers ist sinnvoll, weil dadurch eine Aufwärtsströmung im Bereich des Beckenendes vermieden wird. Außerdem wird so der zum Beckenende hin gerichtete Volumenstrom in Durchströmrichtung verringert. Dies führt zu einem weiter verbesserten Absetzen.
Die an der dem Zulauf gegenüberliegenden Seite des Sedimentationsbeckens vorgesehene Abzugseinrichtung für den Schlamm kann kontinuierlich oder intervallgesteuert angetrieben sein. Insbesondere eine kontinuierliche Betriebsweise bietet sich hier an, wobei es möglich ist, auch im Bereich der Abzugseinrichtung für den Schlamm identische Geschwindigkeiten wie in Nachbarbereichen des Abwassers vorzusehen, um auch an dieser Stelle dem Entstehen von Turbulenzen entgegenzuwirken.

Die Erfindung wird anhand bevorzugter Ausführungsbeispiele weiter erläutert und beschrieben. Es zeigen:
- Fig. 1: einen Längsschnitt durch eine Form des Sedimentationsbeckens (nicht unter Anspruch 1 fallend)
- Fig. 2: einen Längsschnitt durch eine Ausführungsform des Sedimentationsbeckens.

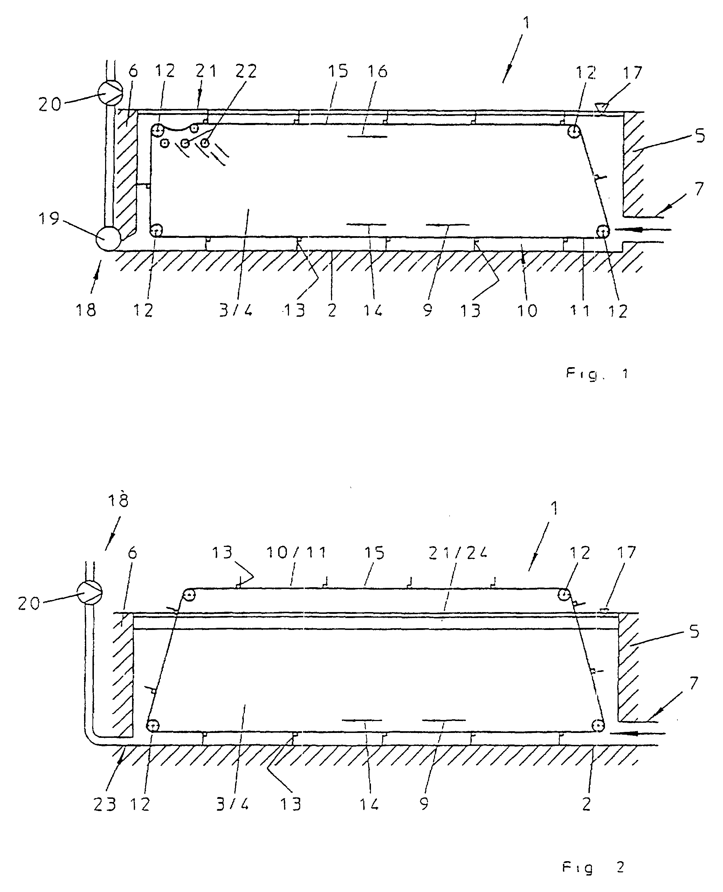

In Fig. 1 ist das Sedimentationsbecken 1 beispielhaft verdeutlicht, wobei die Proportionen nicht unbedingt maßstabsgerecht angegeben sind. Das Sedimentationsbecken 1 weist eine Sohle 2, zwei Längswände 3 und 4 sowie zwei Stirnwände 5 und 6 auf. Die Sohle 2 ist durchgehend flach ausgebildet, d. h. es ist hier kein die Höhe des Sedimentationsbeckens vergrößernder Trichter im Bereich der Sohle 2 vorgesehen. Die Sohle 2 kann sich horizontal erstreckend vorgesehen sein, wie dargestellt. Es ist aber auch möglich, in Durchströmrichtung ein geringes Gefälle zu verwirklichen. Die Längswände 3 und 4 können erheblich länger gestaltet sein als die Stimwände 5 und 6. Das Sedimentationsbecken 1 kann eine Länge in der Größenordnung von 10 - 60 m und eine Breite in der Größenordnung von 3 - 10 m aufweisen. Die Höhe ist vorteilhaft niedrig, und zwar in der Größenordnung von 2 m. Im Bereich der Stirnwand 5 ist ein Zulauf 7 für das Gemisch von Schlamm und Abwasser in das Sedimentationsbecken 1 vorgesehen. Der Zulauf 7 sollte so tief wie möglich angeordnet sein. Er kann sich damit in einer Höhe oberhalb der Räumzone befinden, die sich von der Sohle 2 aus nach oben erstreckt. Oberhalb der Räumzone befindet sich die Speicherzone, darüber die Klarwasserzone. Das Gemisch aus Schlamm und Abwasser, welches über den Zulauf 7 in das Sedimentationsbecken 1 eingebracht wird, bewegt sich von der Stirnwand 5 in Richtung auf die Stirnwand 6, also in Durchströmrichtung 9, die durch einen Pfeil verdeutlicht ist In dem Sedimentationsbecken 1 befindet sich eine Räumeinrichtung 10, die insbesondere als Bandräumer 11 ausgebildet ist. Ein solcher Bandräumer weist in der Regel im Seitenbereich, also benachbart zu den Längswänden 3 und 4, je eine Kette auf, die über Umlenkrollen geführt ist. Zwischen den beiden Ketten befinden sich Räumschilde 13, die im wesentlichen über die Breite des Sedimentationsbeckens 1 durchgehend vorgesehen sind und an der Sohle 2 entlangstreichend werden, wobei die Förderrichtung des Bandräumers 11 durch einen Pfeil 14 verdeutlicht ist. Pfeil 14 und der die Durchströmrichtung 9 wiedergebende Pfeil sind also gleichgerichtet und auch im Betrag etwa gleich groß gestaltet, um auf jeden Fall Relativgeschwindigkeiten an dieser Stelle zu vermeiden und der Ursache für die Ausbildung von Turbulenzen oder entsprechende Strömungen entgegenzuwirken. Diese Vermeidung von quergerichteten Strömungen und Wirbeln ist die Ursache dafür, daß die Sedimentation des Schlammes in dem Sedimentationsbecken 1 vergleichsweise effektiver und gezielter ablaufen kanne womit sich nicht nur an Baulänge des Sedimentationsbeckens 1, sondern vor allem an Bauhöhe und -tiefe einsparen läßt. Im oberen Bereich, also im Bereich des oberen Trums 15, bewegt sich die Räumeinrichtung zwar in Richtung des Pfeils 16 und damit entgegengerichtet zu der Durchströmrichtung 9. In diesem Bereich liegt jedoch in der Regel bereits vollständig Klarwasser vor , so daß sich hier auftretende Geschwindigkeitsgradienten nur begrenzt nachteilig auswirken können. Der obere Trum 15 des Bandräumers 11 ist hier so unterhalb des Wasserspiegels 17 angebracht, daß die Räumschilde 13 auch zur Schwimmschlammräumung genutzt werden können. Die Abfuhr des Schwimmschlammes ist hier aus Gründen der Übersichtlichkeit nicht dargestellt.

Bei der Bewegung des Bandräumers 11 bzw. der Räumeinrichtung 10 laufen die Räumschilde 13 an der Sohle 2 des Beckens entlang und fordern den sedimentierten Schlamm in Richtung auf die Stirnwand 6, in deren Bereich eine Abzugseinrichtung 18 für Schlamm vorgesehen ist. Die Abzugseinrichtung 18 weist als wesentliche Elemente ein Saugrohr 19 und eine Pumpe 20 auf. Sie kann auch als Saugheber 19, 20 ausgebildet sein. Es versteht sich, daß sich auch das Saugrohr 19 über die Breite des Sedimentationsbeckens 1 erstreckt, damit auch der von der Räumeinrichtung 10 herangeförderte Schlamm im unteren Bereich der Stirnwand 6 kontinuierlich und mit einer die Strömung nicht beeinträchtigenden Geschwindigkeit abgezogen wird. Obwohl es an sich möglich ist, die Abzugseinrichtung 18 intervallgesteuert anzutreiben, wird einem kontinuierlichen Antrieb der Vorzug gegeben, um auch insoweit quasi stationäre Verhältnisse in der unteren Ecke im Bereich der Stirnwand 6 zu erzielen.

Schließlich ist noch ein Ablauf 21 für Klarwasser vorgesehen. Es können hier ein oder mehrere Tauchrohre 22 längs und/oder quer vorgesehen sein, die ebenfalls über die Länge und/oder Breite des Sedimentationsbeckens 1 reichen und über die das Klarwasser abgezogen oder abgeführt wird. Die Anordnungsstele für diese Tauchrohre 22 ist nicht kritisch. Die Tauchrohre 22 könnten auch an anderer Stelle der Länge des Sedimentationsbeckens 1, als dargestellt, vorgesehen sein.

Die Ausführungsform des Sedimentationsbeckens 1 gemäß Fig. 2 gleicht in weiteren Bereichen der Ausführungsform gemäß Fig. 1. Lediglich der Zulauf 7 ist hier vergleichsweise noch tiefer in einer Höhe angeordnet, die der zu erwartenden Räumzone entspricht. In dieser Räumzone befindet sich bereits Schlamm, jedoch hier noch in beweglicher, wenn auch zusammengeklebter Form. Die Räumschilde 13 erstrecken sich in ihrer Höhe, die zwischen 5 und 20 cm betragen kann, jedoch nur im Bereich der Räumzone, in der sich Schlamm bei der Sedimentation ablagert. Die beiden oberen Umlenkrollen 12 sind hier oberhalb des Wasserspiegels 17 angeordnet, so daß eine gegenläufige Bewegung des oberen Trums 15 - entgegengesetzt zur Durchströmrichtung 9 - im Sedimentationsbecken 1 bzw. unterhalb des Wasserstandes 17 vermieden wird. Statt des mit Löchern versehenen Saugrohres 18 ist hier ein Saugkasten 23 im unteren Eckbereich der Stirnwand 6 vorgesehen, der ebenfalls über die Breite des Sedimentationsbeckens 1 reicht und mit entsprechenden Öffnungen versehen ist, durch die der von der Abzugseinrichtung 18 übernommene und von der Räumeinrichtung 10 geförderte Schlamm übertritt. Als Ablauf 21 für Klarwasser sind hier Überlaufrinnen 24 angedeutet, die entlang der Längswände 3 und 4 des Sedimentationsbeckens 1 vorgesehen sind. Auch die Überiaufrinnen 24 können längs und/oder quer angeordnet sein. Auch hierbei wird wiederum die Räumeinrichtung 10 mit einer Geschwindigkeit gemäß Pfeil 14 angetrieben, der die Geschwindigkeit des Gemisches aus Schlamm und Abwasser unmittelbar oberhalb des unteren Trums der Räumeinrichtung 10 in Durchströmrichtung 9 entspricht. Da an dieser Stelle Relativgeschwindigkeiten vermieden werden, ist auch die Ursache für entsprechende Störströmungen an dieser Stelle beseitigt.

### BEZUGSZEICHENLISTE

1 - Sedimentationsbecken
2 - Sohle
3 - Längswand
4 - Längswand
5 - Stirnwand
6 - Stirnwand
7 - Zulauf
8 -
9 - Durchströmrichtung
10 - Räumeinrichtung
11 - Bandräumer
12 - Umlenkrolle
13 - Räumschild
14 - Pfeil
15-Trum
16-Pfeil
17 - Wasserspiegel
18 - Abzugseinrichtung
19 - Saugrohr
20 - Pumpe
21-Ablauf
22 - Tauchrohr
23 - Saugkasten
24 - Überlaufrinne

## Patentansprüche

1. Sedimentationsbecken (1) mit rechteckigem Grundriß zum Abscheiden von Schlamm aus Abwasser, mit einem Zulauf (7) für das Gemisch aus Schlamm und Abwasser in das Sedimentationssbecken (1), einer an der Sohle (2) des Sedimentationsbeckens (1) entiangstreichend angetriebenen Räumeinrichtung (10) für den abgesetzten Schlamm, einer Abzugseinrichtung (18) für den Schlamm und einem Ablauf (21) für das Klarwasser, wobei die Abzugseinrichtung (18) für den Schlamm an der dem Zulauf (7) gegenüberliegenden Seite des Sedimentationsbeckens (1) vorgesehen ist, und die Räumeinrichtung (10) so angetrieben ist, daß sie nur in Abzugsrichtung fördert und daß der Schlamm in der Durchströmrichtung (9) des Abwassers durch das Sedimentationsbecken (1) mit einer Geschwindigkeit gefördert wird, die in etwa der Durchströmgeschwindigkeit des Abwassers unmittelbar über der Räumeinrichtung (10) entspricht, **dadurch gekennzeichnet**, daß die Unterkante des Zulaufs (7) für das Gemisch aus Schlamm und Abwasser etwa in Höhe der Sohle (2) des Sedimentationsbeckens (1) angeordnet ist.

2. Sedimentationsbecken nach Anspruch 1, **dadurch gekennzeichnet**, daß die Sohle (2) des Sedimentationsbeckens (1) durchgehend flach ausgebildet ist.

3. Sedimentationssbecken nach Anspruch 2, **dadurch gekennzeichnet**, daß der Zulauf (7) für das Gemisch aus Schlamm und Abwasser sich im wesentlichen gleichmäßig über die Breite des Sedimentationsbeckens (1) erstreckt.

4. Sedimentationsbecken nach Anspruch 1, **dadurch gekennzeichnet**, daß sich die Abzugseinrichtung (18) für den Schlamm gleichmäßig im wesentlichen über die Breite des Sedimentationsbeckens (1) erstreckt.

5. Sedimentationsbecken nach Anspruch 1, **dadurch gekennzeichnet**, daß die Räumeinrichtung (10) als Bandräumer (11) ausgebildet ist.

6. Sedimentationsbecken nach Anspruch 1 oder 4, **dadurch gekennzeichnet**, daß die Abzugseinrichtung (18) für den Schlamm als Saugheber (19,20,21) ausgebildet ist, der mit Saugdüsen ausgestattet ist.

7. Sedimentationsbecken nach Anspruch 5, **dadurch gekennzeichnet**, daß der obere Trum (15) des Bandräumers (11) zur Schwimmschlammräumung ausgebildet und angeordnet ist.

8. Sedimentationsbecken nach Anspruch 1, **dadurch gekennzeichnet**, daß als Ablauf (18) für das Klarwasser Überlaufrinnen (24) vorgesehen sind, die seitlich oder in dem dem Zulauf (7) zugekehrten Bereich des Sedimentationsbeckens (1) angeordnet sind.

9. Sedimentationsbecken nach Anspruch 1, **dadurch gekennzeichnet**, daß die an der dem Zulauf (7) gegenüberliegenden Seite des Sedimentationsbeckens (1) vorgesehene Abzugseinrichtung (18) für den Schlamm kontinuierlich oder intervallgesteuert angetrieben wird.

## Claims

1. A sedimentation basin (1) with rectangular ground plan for the separation of sludge from waste water, with an inlet (7) for the mixture of sludge and waste water into the sedimentation basin (1), a clearing device (10) for the deposited sludge, driven rubbing along the base (2) of the sedimentation basin (1), a discharge device (18) for the sludge and an outlet (21) for the clean water, wherein the discharge device (18) for the sludge is provided at the side of the sedimentation basin (1) opposite the inlet (7), and the clearing device (10) is driven so that it only conveys in the discharge direction and so that the sludge is conveyed in the throughflow direction (9) of the waste water through the sedimentation basin (1) at a speed corresponding to some extent to the throughflow speed of the waste water directly via the clearing device (10),
**characterised in that** the lower edge of the inlet (7) for the mixture of sludge and waste water is disposed roughly at the height of the base (2) of the sedimentation basin (1).

2. A sedimentation basin according to Claim 1,
**characterised in that** the base (2) of the sedimentation basin (1) has a continuously flat construction.

3. A sedimentation basin according to Claim 2,
**characterised in that** the inlet (7) for the mixture of sludge and waste water extends substantially uniformly over the width of the sedimentation basin (1).

4. A sedimentation basin according to Claim 1,
**characterised in that** the discharge device (18) for the sludge extends uniformly substantially over the width of the sedimentation basin (1).

5. A sedimentation basin according to Claim 1,
**characterised in that** the clearing device (10) is constructed as a chain scraper (11).

6. A sedimentation basin according to Claim 1 or 4,
**characterised in that** the discharge device (18) for the sludge is constructed as siphons (19, 20, 21) and is equipped with suction nozzles.

7. A sedimentation basin according to Claim 5,
**characterised in that** the upper strand (15) of the chain scraper (11) is constructed and disposed for the removal of floating sludge.

8. A sedimentation basin according to Claim 1,
**characterised in that** overflow channels (24), which are disposed laterally or in the region of the sedimentation basin (1) faced towards the inlet (7), are provided as an outlet (18) for the clean water.

9. A sedimentation basin according to Claim 1,
**characterised in that** the discharge device (18) for the sludge provided at the side of the sedimentation basin (1) lying opposite the inlet (7) is driven continuously or in interval controlled manner.

## Revendications

1. Bassin de sédimentation (1) à profil rectangulaire pour la déposition de boue issue d'eaux usées, avec une alimentation (7), pour le mélange constitué de boue et d'eaux usées, dans le bassin de sédimentation (1), un dispositif de nettoyage (10) entraîné en raclant la boue déposée sur la sole (2) du bassin de sédimentation (1), un dispositif d'extraction (18) pour la boue et une évacuation (21) pour l'eau claire, le dispositif d'extraction (18) pour la boue étant prévu sur un côté, opposé à celui de l'alimentation (7), du bassin de sédimentation (1) et le dispositif de nettoyage (10) étant entraîné de manière qu'il ne véhicule que dans le sens de l'extraction et que la boue, se trouvant dans la direction de traversée par l'écoulement (9) des eaux usées dans le bassin de sédimentation (1), soit véhiculée à une vitesse qui corresponde à peu près à la vitesse de traversée d'écoulement des eaux usées, directement au-dessus du dispositif de nettoyage (10), **caractérisé en ce que** l'arête inférieure de l'alimentation (7) du mélange, constitué de boue et d'eaux usées, est disposée à peu près au niveau de la sole (2) du bassin de sédimentation (1).

2. Bassin de sédimentation selon la revendication 1, **caractérisé en ce que** la sole (2) du bassin de sédimentation (1) est de configuration continûment plate.

3. Bassin de sédimentation selon la revendication 2, **caractérisé en ce que** l'alimentation (7) du mélange, constitué de boue et d'eaux usées, s'étend sensiblement régulièrement sur toute la largeur du bassin de sédimentation (1).

4. Bassin de sédimentation selon la revendication 1, **caractérise en ce que** le dispositif d'extraction (18) de la boue s'étend régulièrement sensiblement sur toute la largeur du bassin de sédimentation (1).

5. Bassin de sédimentation selon la revendication 1, **caractérisé en ce que** le dispositif de nettoyage (10) est réalisé sous la forme de nettoyeur à bande (11).

6. Bassin de sédimentation selon la revendication 1 ou 4, **caractérisé en ce que** le dispositif d'extraction (18) prévu pour la boue est réalisé sous la forme d'élévateur à aspiration (19, 20, 21), muni de buses d'aspiration.

7. Bassin de sédimentation selon la revendication 5, **caractérisé en ce que** le brin supérieur (15) du nettoyeur à bande (11) est réalisé et disposé pour évacuer la boue flottante.

8. Bassin de sédimentation selon la revendication 1, **caractérisé en ce que**, à titre d'évacuation (18) pour l'eau claire, sont prévues des goulottes de déversement (24), disposées latéralement ou dans la zone, tournée vers l'alimentation (7), du basain de sédimentation (1).

9. Bassin de sédimentation selon la revendication 1, **caractérisé en ce que** le dispositif d'extraction (18) pour extraire la boue, prévu sur le côté, opposé à l'alimentation (7), du bassin de sédimentation (1) est entraîné de façon continue ou par intervalles et de façon commandée.
